# EUROPEAN PATENT APPLICATION

(11) **EP 4 791 018 A1**
(43) Date of publication of application: **12.08.2026**
(21) Application number: 24874416.1
(22) Date of filing: 04.09.2024
(51) Int. Cl.: H04N 23/66, G06T 19/00, H04N 23/60

(54) **IMAGING OUTPUT DEVICE, METHOD FOR OPERATING IMAGING OUTPUT DEVICE, AND OPERATION PROGRAM FOR IMAGING OUTPUT DEVICE**

(30) Priority: 04.10.2023 JP 2023173221
(71) Applicant: FUJIFILM Corporation, Tokyo 106-8620 (JP)
(72) Inventor: OSHIMA, Kazuki, Saitama-shi, Saitama 331-9624 (JP)
(74) Representative: Parker, Andrew James
(86) International application number: PCT/JP2024/031784
(87) International publication number: WO 2025/074804

(57) **Abstract**

Provided is an imaging output device that includes a processor, in which the processor is configured to, in a case where an imaging instruction for an image is issued by a user to a first imaging device present in a first space, issue an imaging instruction for an image to a second imaging device present in a second space different from the first space, and cause the second imaging device to output a second image corresponding to a first image captured by the first imaging device.

## Description

### BACKGROUND OF THE INVENTION

### 1. Field of the Invention

The technology of the present disclosure relates to an imaging output device, an operation method of an imaging output device, and an operation program of an imaging output device.

### 2. Description of the Related Art

JP2009-176025A describes a virtual space communication system comprising a server device that provides a virtual space in which a character that operates as an alter ego of a user is disposed, and a user terminal that is connected to the server device via a network and that is used by the user to operate the character. In the virtual space communication system disclosed in JP2009-176025A, the virtual space has a virtual camera for the character to perform imaging in the virtual space, and the user terminal is connected to a printing device that prints an image. The user terminal acquires, from the server device, a captured image in the virtual space obtained by imaging with the virtual camera based on the operation of the character by the user, and causes the printing device to print the captured image.

"Take stereoscopic photographs, draw handwritten characters, and even fly! Griffon-winged black panther beastman avatar 'Azur 2' with instant camera (polaroid camera) compatible with physbone for VRChat [accessory for avatar]", searched on February 26, 2023, Internet <URL: https://booth.pm/ja/items/3961856>, (the term "polaroid" described in the title of the Internet page is a registered trademark) discloses an aspect in which an instant photograph of the virtual space is captured using an instant camera operated by an avatar in the virtual space.

### SUMMARY OF THE INVENTION

One embodiment according to the technology of the present disclosure provides an imaging output device, an operation method of an imaging output device, and an operation program of an imaging output device that can respond to a request of a user.

The imaging output device according to the present disclosure comprises a processor, in which the processor is configured to issue, in a case where an imaging instruction for an image is issued by a user to a first imaging device present in a first space, an imaging instruction for an image to a second imaging device present in a second space different from the first space, and cause the second imaging device to output a second image corresponding to a first image captured by the first imaging device.

It is preferable that the processor is configured to generate the second image that reproduces how a subject appears in the first image.

It is preferable that the first space is a real space and the second space is a virtual space, the first imaging device is provided with a sensor that detects a relative position and a relative orientation of the first imaging device with respect to a reference position and a reference orientation, and the processor is configured to generate the second image that reproduces how the subject appears in the first image, based on a detection result of the sensor in a case where the imaging instruction is issued.

It is preferable that the first space is a real space and the second space is a virtual space, and the processor is configured to composite, in a case where a first avatar of a first user who has issued the imaging instruction to the first imaging device in the real space, the first avatar being active in the virtual space, and a second avatar of a second user different from the first user appear in the second image and only the first user appears in the first image, the second user into the first image.

It is preferable that the first space is a real space and the second space is a virtual space, the first imaging device has a function of printing an image, and the processor is configured to cause, in addition to the second imaging device, the first imaging device to also print the second image.

An operation method of an imaging output device, the operation method comprises issuing, in a case where an imaging instruction for an image is issued by a user to a first imaging device present in a first space, an imaging instruction for an image to a second imaging device present in a second space different from the first space; and causing the second imaging device to output a second image corresponding to a first image captured by the first imaging device.

An operation program of an imaging output device, the operation program causing a computer to execute a process comprises issuing, in a case where an imaging instruction for an image is issued by a user to a first imaging device present in a first space, an imaging instruction for an image to a second imaging device present in a second space different from the first space; and causing the second imaging device to output a second image corresponding to a first image captured by the first imaging device.

### BRIEF DESCRIPTION OF THE DRAWINGS

FIG. 1 is a diagram showing an instant camera, a user terminal, and a virtual space management server present in a real space.
FIG. 2 is a block diagram showing an internal configuration of the instant camera.
FIG. 3 is a diagram showing a virtual space and avatars.
FIG. 4 is a block diagram showing a computer that constitutes the user terminal and the virtual space management server.
FIG. 5 is a block diagram showing a processing unit of a CPU of the user terminal.
FIG. 6 is a block diagram showing a processing unit of a CPU of the virtual space management server.
FIG. 7 is a diagram showing object information.
FIG. 8 is a diagram showing user information.
FIG. 9 is a diagram showing a flow of imaging output processing in the real space and the virtual space.
FIG. 10 is a diagram showing a flow of the imaging output processing in the real space and the virtual space.
FIG. 11 is a flowchart showing a processing procedure of the virtual space management server.
FIG. 12 is a diagram showing a flow of the imaging output processing in the real space and the virtual space according to a second embodiment.
FIG. 13 is a diagram showing a flow of the imaging output processing in the virtual space according to the second embodiment.
FIG. 14 is a diagram showing a flow of the imaging output processing in the real space and the virtual space according to the second embodiment.

### DESCRIPTION OF THE PREFERRED EMBODIMENTS

### [First embodiment]

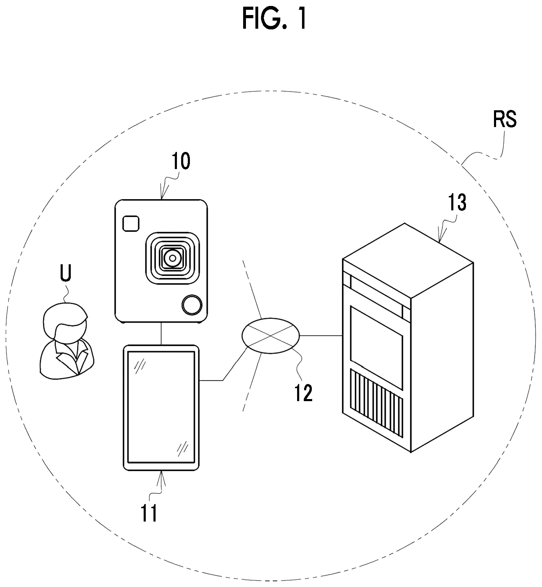

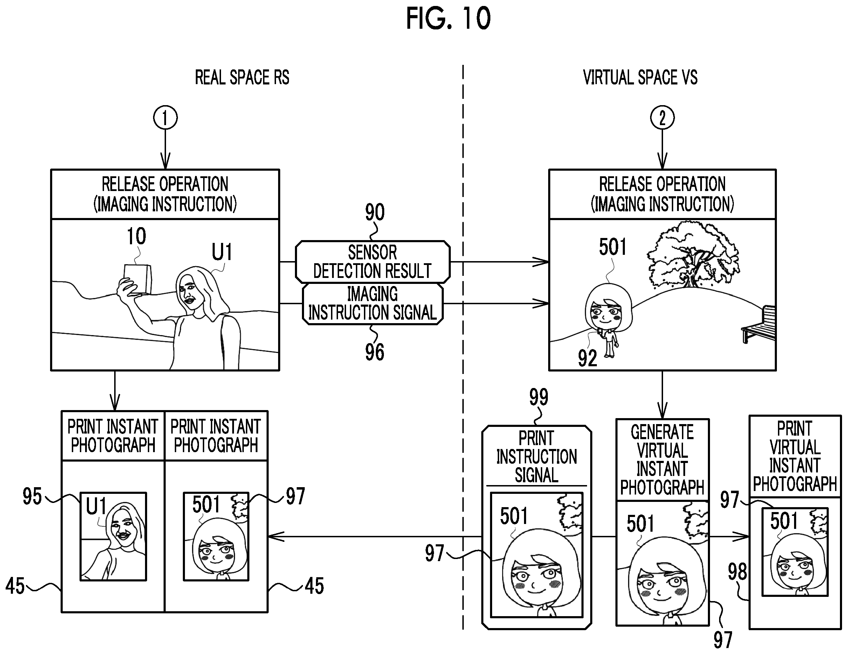

As shown in FIG. 1 as an example, in a real space RS, a user U owns an instant camera 10 and a user terminal 11. The instant camera 10 is used for capturing an instant photograph 95 (see FIG. 10). The instant camera 10 is connected to the user terminal 11 in a mutually communicable manner by short-range wireless communication such as Bluetooth (registered trademark). The real space RS is an example of a "first space" according to the technology of the present disclosure. In addition, the instant camera 10 is an example of a "first imaging device" according to the technology of the present disclosure. Further, the instant photograph 95 is an example of a "first image" according to the technology of the present disclosure.

Specifically, the user terminal 11 is a smartphone, a tablet terminal, a laptop personal computer, a desktop personal computer, or the like. In addition, the user terminal 11 may be a wearable device such as a head-mounted display having a display function in a portion that covers the eyes. The user terminal 11 is connected to a virtual space management server 13 via a network 12 in a mutually communicable manner. The network 12 is, for example, a wide area network (WAN) such as the Internet or a public communication network.

The virtual space management server 13 is, for example, a server computer, a workstation, or the like, and is an example of an "imaging output device" according to the technology of the present disclosure. A plurality of user terminals 11 of a plurality of users U are connected to the virtual space management server 13 via the network 12.

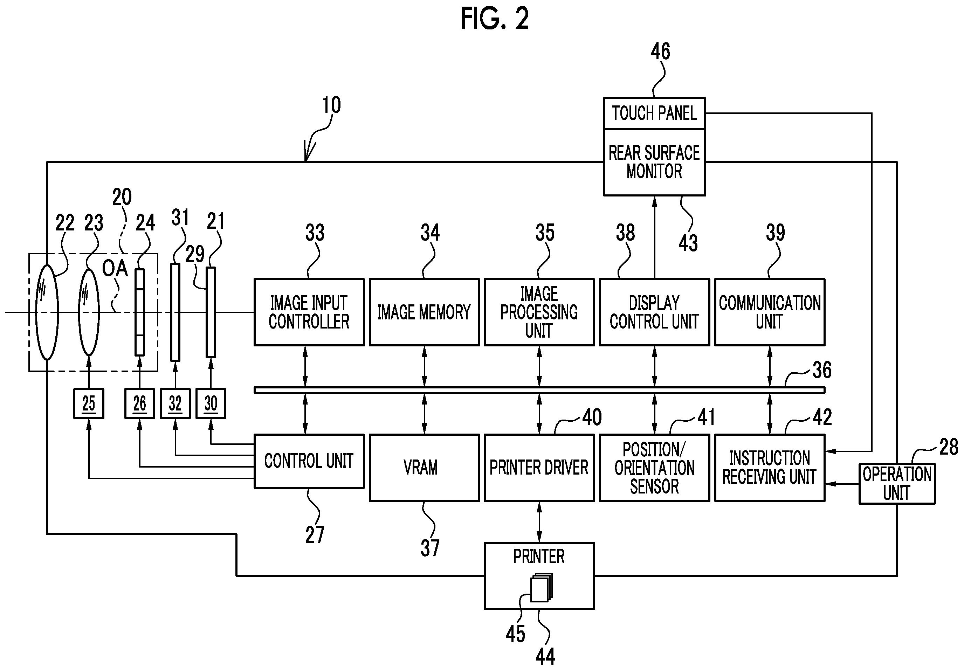

As shown in FIG. 2 as an example, the instant camera 10 comprises an imaging optical system 20 and an imaging element 21. The imaging optical system 20 has a plurality of types of lenses for forming an image of subject light on the imaging element 21. Specifically, the imaging optical system 20 has an objective lens 22 and a focus lens 23. The objective lens 22 and the focus lens 23 are disposed in this order from an object side (subject side) toward an image formation side (imaging element 21 side). Although simplified in FIG. 1, the objective lens 22 and the focus lens 23 are lens groups in which a plurality of lenses are actually combined. The imaging optical system 20 also has a stop 24. The stop 24 is disposed closest to the image formation side in the imaging optical system 20. The imaging optical system 20 may have a zoom lens.

A focus lens driving mechanism 25 is provided in the focus lens 23, and a stop opening degree adjustment mechanism 26 is provided in the stop 24. The focus lens driving mechanism 25 includes, for example, a focus cam ring that holds the focus lens 23 and that has a circumference on which a cam groove is formed, a focus motor that moves the focus cam ring along an optical axis OA by rotating the focus cam ring about the optical axis OA, and a driver of the focus motor.

The stop 24 is, for example, an iris stop and is configured by combining a plurality of stop leaf blades. The stop 24 adjusts an amount of light passing therethrough by simultaneously moving stop leaf blades by a cam mechanism to open and close a central opening formed by inner edges of the stop leaf blades, that is, to change an opening degree of the opening (hereinafter referred to as an "opening degree of the stop 24"). The stop opening degree adjustment mechanism 26 includes a stop motor that opens and closes the stop leaf blades, a driver of the stop motor, and the like.

The focus motor and the stop motor are, for example, stepping motors. In this case, the position of the focus lens 23 on the optical axis OA and the opening degree of the stop 24 can be derived from the drive amounts of the focus motor and the stop motor. A position sensor may be provided to detect the position of the focus lens 23 instead of the drive amount of the focus motor.

Electrical components such as the focus motor and the stop motor or the driver of the focus lens driving mechanism 25 and the stop opening degree adjustment mechanism 26 are connected to the control unit 27. The electrical components of the focus lens driving mechanism 25 and the stop opening degree adjustment mechanism 26 are driven under the control of the control unit 27. More specifically, the control unit 27 issues a drive signal corresponding to the distance from the subject, the brightness of the subject, or the like to drive the electrical components of the focus lens driving mechanism 25 and the stop opening degree adjustment mechanism 26. For example, the control unit 27 issues a drive signal to the driver of the focus motor of the focus lens driving mechanism 25 to move the focus lens 23 along the optical axis OA, thereby performing automatic focus adjustment. In addition, the control unit 27 issues a drive signal to the driver of the stop motor of the stop opening degree adjustment mechanism 26 to change the opening degree of the stop 24, thereby performing automatic exposure adjustment.

The focus motor and the stop motor output the drive amount to the control unit 27. The control unit 27 derives the position of the focus lens 23 on the optical axis OA and the opening degree of the stop 24 from the drive amount.

The imaging element 21 is, for example, a complementary metal-oxide-semiconductor (CMOS) image sensor and includes an imaging surface 29 for capturing the subject light. The imaging surface 29 is formed by a plurality of pixels arranged in two dimensions. The pixel accumulates signal charge corresponding to the subject light and outputs an image signal (voltage signal) corresponding to the signal charge. The imaging element 21 is disposed such that a center of the imaging surface 29 matches the optical axis OA and the imaging surface 29 is orthogonal to the optical axis OA. It should be noted that the terms "match" and "orthogonal" used herein mean not only perfect match and orthogonality but also match and orthogonality in a sense including an error generally allowed in the technical field to which the technology of the present disclosure belongs.

An imaging element driver 30 is connected to the imaging element 21. The imaging element driver 30 is connected to the control unit 27. The imaging element driver 30 performs, under the control of the control unit 27, supplying of a vertical scanning signal and a horizontal scanning signal to the imaging element 21, or the like to control an imaging timing of the subject light by the imaging element 21. Further, the imaging element driver 30 sets a gain that is given to the image signal which is output from the pixels and that corresponds to International Organization for Standardization (ISO) sensitivity.

A shutter 31 is provided between the imaging optical system 20 and the imaging element 21. The shutter 31 is, for example, a focal-plane shutter that has a front curtain and a rear curtain. A shutter driving mechanism 32 is connected to the shutter 31. The shutter driving mechanism 32 includes an electromagnet that holds the front curtain and the rear curtain and releases the holding thereof to cause the front curtain and the rear curtain to travel, a driver of the electromagnet, and the like. The shutter driving mechanism 32 is driven under control of the control unit 27 and opens and closes the shutter 31.

The control unit 27 is connected to each unit such as an image input controller 33, an image memory 34, and an image processing unit 35, through a busline 36. In addition, a video random access memory (VRAM) 37, a display control unit 38, a communication unit 39, a printer driver 40, a position/orientation sensor 41, an instruction receiving unit 42, and the like are connected to the busline 36. Although not shown, a strobe driving control unit that controls driving of the strobe device, a media controller that controls writing of the image data to the memory card, and the like are also connected to the busline 36.

Image data obtained by imaging the subject light is input to the image input controller 33 from the imaging element 21. The image input controller 33 outputs the image data to the image memory 34. The image memory 34 is, for example, a synchronous dynamic random access memory (SDRAM) and temporarily stores the image data.

The image processing unit 35 reads out unprocessed image data from the image memory 34. The image processing unit 35 performs various types of image processing on the image data. Examples of the various types of image processing include offset correction processing, sensitivity correction processing, pixel interpolation processing, white balance correction processing, gamma-correction processing, demosaicing processing, generation processing of a brightness signal and a color difference signal, contour enhancement processing, and color correction processing. The image processing unit 35 writes the image data subjected to the various types of image processing back to the image memory 34.

The image data, which has been subjected to the various types of image processing and is displayed as a live view image (also referred to as live preview image), is input into the VRAM 37 from the image memory 34.

The VRAM 37 has an area that stores image data corresponding to two consecutive frames. The image data stored in the VRAM 37 is sequentially rewritten to new image data. The VRAM 37 sequentially outputs the newer image data of the image data corresponding to the two consecutive frames to the display control unit 38.

The display control unit 38 has a function of a so-called video encoder that converts the image data from the VRAM 37 into video data and outputs the video data to the rear surface monitor 43. Accordingly, the user U can visually recognize the live view image through the rear surface monitor 43. The display frame rate of the live view image is, for example, 30 frames per second (fps).

The communication unit 39 has a function of wireless communication with an external apparatus such as the user terminal 11 by short-range wireless communication such as Bluetooth (registered trademark). In addition, the communication unit 39 also has a function of wired communication with the external apparatus via a connection terminal such as a universal serial bus (USB) terminal.

In a case where an imaging instruction for the instant photograph 95 is issued by operating the release button of the operation unit 28, the image data subjected to the various types of image processing of the image memory 34 is output to the printer driver 40. A printer 44 is connected to the printer driver 40. The printer 44 prints the image data on an incorporated instant film 45 as the instant photograph 95 under the control of the printer driver 40. The instant film 45 on which the instant photograph 95 is printed is output to the outside from a film discharge port provided on one side surface of the instant camera 10. The printer driver 40 and the printer 44 are examples of a "function of printing an image" according to the technology of the present disclosure. The instant film 45 may be of either a silver halide type or a thermal type.

The position/orientation sensor 41 is composed of an acceleration sensor and a gyro sensor. The position/orientation sensor 41 detects a relative position and a relative orientation of the instant camera 10 with respect to a reference position and a reference orientation at a preset sampling interval (for example, several milliseconds).

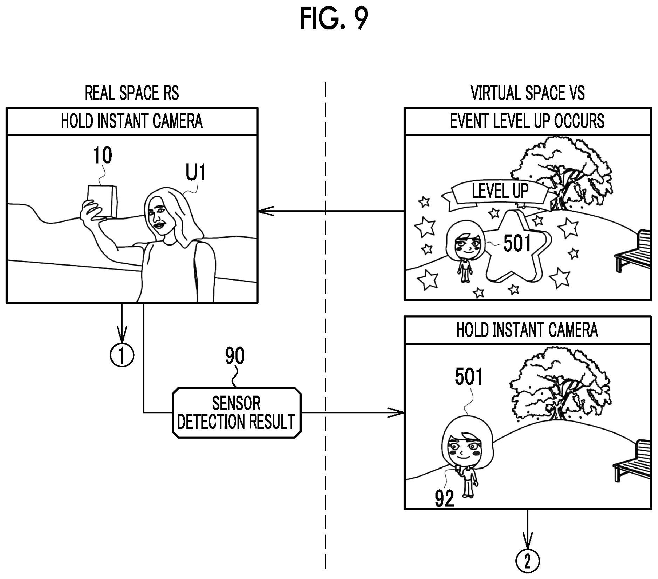

The position/orientation sensor 41 sequentially outputs detection results (hereinafter, referred to as sensor detection results) 90 (see FIG. 9) of the relative position and the relative orientation of the instant camera 10 with respect to the reference position and the reference orientation to the communication unit 39. The communication unit 39 wirelessly transmits the sensor detection result 90 to the user terminal 11.

The instruction receiving unit 42 receives various operation instructions input from the user U through the operation unit 28 and through a touch panel 46 provided in an integrated manner with the rear surface monitor 43. The instruction receiving unit 42 outputs the received various operation instructions to the control unit 27 through the busline 36.

The release button of the operation unit 28 is, for example, a two-stage push-button capable of a halfway push operation and a full push operation. An imaging preparation instruction of an instant photograph 95 is issued by the halfway push operation of the release button, and an imaging instruction of the instant photograph 95 is issued by the full push operation. In a case where the imaging instruction of the instant photograph 95 is issued by the full push operation of the release button, the communication unit 39 wirelessly transmits an imaging instruction signal 96 (see FIG. 10) indicating that the imaging instruction of the instant photograph 95 is issued to the user terminal 11.

The operation unit 28 also includes a menu button for displaying various setting menus on the rear surface monitor 43, a cross key used for numerical value setting, switching of options, and the like, and a confirmation button operated in a case of confirming the setting and the like. A display surface of the rear surface monitor 43 is overlaid with the touch panel 46. The touch panel 46 detects contact with a finger of a user or a dedicated indicator, such as a stylus pen, to recognize various operation instructions input from the user.

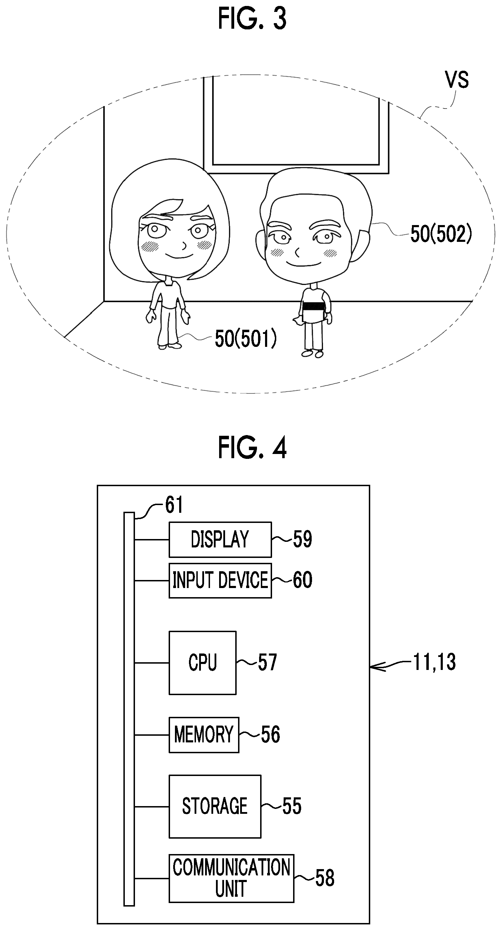

As shown in FIG. 3 as an example, the virtual space management server 13 manages a virtual space VS to be provided to the user U through the user terminal 11. The virtual space VS is a space of three-dimensional computer graphics (CG) that can be used by a computer, and is a place where various social activities, such as studying, working, shopping, and playing, are performed separately from a real space RS while the plurality of users U communicate with each other. The plurality of users U are active as respective avatars 50 in the virtual space VS. FIG. 2 shows a state in which an avatar 501 and an avatar 502 are standing side by side.

As shown in FIG. 4 as an example, computers that constitute the user terminal 11 and the virtual space management server 13 basically have the same configuration and comprise a storage 55, a memory 56, a central processing unit (CPU) 57, a communication unit 58, a display 59, and an input device 60. These components are connected to each other through a busline 61.

The storage 55 is a hard disk drive that is either incorporated into the computers that constitute the user terminal 11 and the virtual space management server 13, or connected to the computers through a cable or a network. Alternatively, the storage 55 is a disk array in which a plurality of hard disk drives are mounted. A control program, such as an operating system, various application programs (hereinafter, abbreviated to APs), various types of data associated with these programs, and the like are stored in the storage 55. Note that a solid-state drive may be used instead of the hard disk drive.

The memory 56 is a work memory for the CPU 57 to execute processing. The CPU 57 loads the program stored in the storage 55 into the memory 56 and executes the processing in accordance with the program. Consequently, the CPU 57 comprehensively controls each unit of the computer. The CPU 57 is an example of a "processor" according to the technology of the present disclosure. The memory 56 may be incorporated into the CPU 57.

The communication unit 58 is a network interface that controls transmission of various types of information through the network 12 or the like. The display 59 displays various screens. The various screens have an operation function using a graphical user interface (GUI). The computers that constitute the user terminal 11 and the virtual space management server 13 receive input of an operation instruction from the input device 60 through various screens. The input device 60 is a keyboard, a mouse, a touch panel, a microphone for voice input, or the like.

In the following description, the subscript "A" is added to the reference numerals of the respective units of the computer that constitutes the user terminal 11 (the storage 55, the CPU 57, the display 59, and the input device 60), and the subscript "B" is added to the reference numerals of the respective units of the computer that constitutes the virtual space management server 13 (the storage 55, the CPU 57, and the input device 60) for distinction.

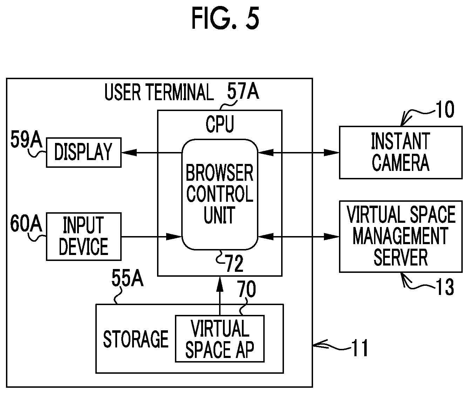

As shown in FIG. 5 as an example, a virtual space AP 70 is stored in the storage 55A of the user terminal 11. The virtual space AP 70 is installed in the user terminal 11 by the user U. The virtual space AP 70 is an AP for the user U to enjoy the virtual space VS on the user terminal 11. In a case where the virtual space AP 70 is activated, the CPU 57A of the user terminal 11 functions as a browser control unit 72 in cooperation with the memory 56 and the like. The browser control unit 72 controls the operation of a dedicated web browser of the virtual space AP 70.

The browser control unit 72 receives various types of information from the instant camera 10, such as a sensor detection result 90 and an imaging instruction signal 96. Then, the received various types of information are transferred to the virtual space management server 13. In addition, the browser control unit 72 also receives various types of information from the virtual space management server 13, such as a print instruction signal 99 (see FIG. 10). Then, the received various types of information are transferred to the instant camera 10. That is, the user terminal 11 functions as a device that relays the exchange of various types of information between the instant camera 10 and the virtual space management server 13.

The browser control unit 72 reproduces various screens based on various types of screen data from the virtual space management server 13 and displays the reproduced various screens on the display 59A. The screen data is, for example, screen data for web distribution created by a markup language such as Extensible Markup Language (XML). Another data description language such as Javascript (registered trademark) Object Notation (JSON) may be used instead of XML.

In addition, the browser control unit 72 receives various operation instructions which are input from the input device 60A by the user U through various screens. The browser control unit 72 transmits the received operation instruction to the virtual space management server 13 together with a terminal identification data (ID) for uniquely identifying each user terminal 11.

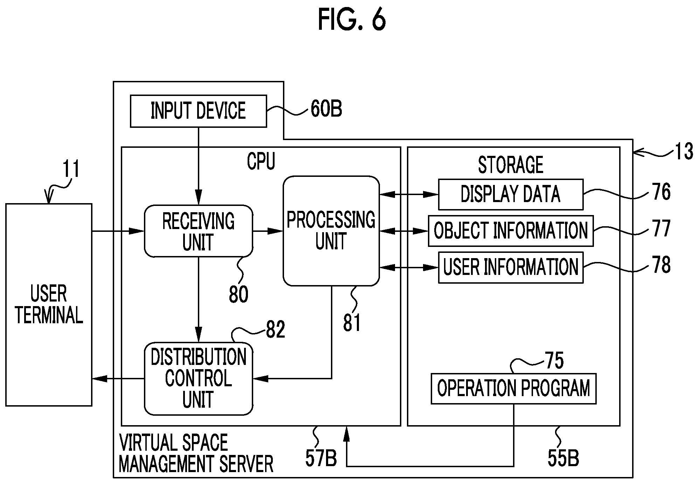

As shown in FIG. 6 as an example, an operation program 75 is stored in the storage 55B of the virtual space management server 13. The operation program 75 is an AP for causing a computer constituting the virtual space management server 13 to function as an "imaging output device" according to the technology of the present disclosure. That is, the operation program 75 is an example of an "operation program of an imaging output device" according to the technology of the present disclosure.

The storage 55B also stores display data 76, object information 77, user information 78, and the like. The display data 76 is various pieces of three-dimensional CG data necessary for displaying the virtual space VS. The object information 77 is information on various objects included in the virtual space VS. The object is, for example, a virtual object that can be involved by the avatar 50, such as being gripped and operated, being ridden and operated, or being worn. The object is, specifically, various persons, buildings, and articles disposed in the virtual space VS. The persons include the avatars 50 shown in FIG. 2 and characters created by a creator of the virtual space VS. In addition, a virtual instant camera 92 (see FIG. 9) and a virtual instant film 98 (see FIG. 10) described below are also a type of object. The user information 78 is information on each user U.

In a case where the operation program 75 is activated, the CPU 57B of the virtual space management server 13 functions as a receiving unit 80, a processing unit 81, and a distribution control unit 82 in cooperation with the memory 56 and the like.

The receiving unit 80 receives various types of information from the instant camera 10, which is transferred by the user terminal 11, such as a sensor detection result 90 and an imaging instruction signal 96. In addition, the receiving unit 80 receives various operation instructions of the user U and the terminal ID from the user terminal 11. The receiving unit 80 outputs the various types of information from the instant camera 10 and the various operation instructions from the user terminal 11 to the processing unit 81, and outputs the terminal ID to the distribution control unit 82. Additionally, the receiving unit 80 also receives various operation instructions from the creator of the virtual space VS through the input device 60B.

The processing unit 81 is in charge of general processing related to the management of the virtual space VS in response to the various types of information and the various operation instructions from the receiving unit 80. The processing performed by the processing unit 81 is, for example, authentication processing of the user U, display update processing of the virtual space VS, position update processing of the object, update processing of the display data 76, update processing of the object information 77, update processing of the user information 78, imaging output processing, and the like.

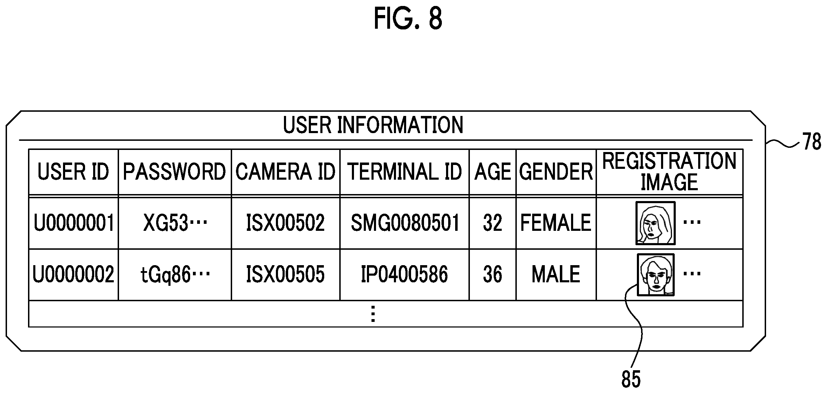

The authentication processing of the user U is processing of collating a user ID and a password for uniquely identifying each user U, which are included in an authentication instruction as the operation instruction, with the user ID and the password (see FIG. 8) stored in the user information 78. The display update processing of the virtual space VS is, for example, processing of reading out the display data 76 in response to a movement instruction of the avatar 50 as the operation instruction from the storage 55B, generating screen data of the virtual space display screen based on the readout display data 76, and outputting the generated screen data to the distribution control unit 82.

The position update processing of the object is processing of updating position information of the object in response to a movement instruction of the object as the operation instruction. The update processing of the display data 76 is processing of storing the display data 76 newly created by the creator of the virtual space VS in the storage 55B in response to an update instruction of the display data 76 as the operation instruction. The update processing of the object information 77 is processing of updating various items that constitute the object information 77 and processing of adding information on an object newly created by the creator of the virtual space VS, in response to an update instruction of the object information 77 as the operation instruction. The update processing of the user information 78 is processing of updating various items that constitute the user information 78 and processing of adding information on the new user U, in response to an update instruction of the user information 78 as the operation instruction. The imaging output processing will be described below with reference to FIGS. 9 and 10.

The distribution control unit 82 controls distribution of various types of information to the user terminal 11. For example, the distribution control unit 82 controls distribution of the screen data of the virtual space display screen. In this case, the distribution control unit 82 specifies the user terminal 11 to which the virtual space display screen is distributed, based on the terminal ID from the receiving unit 80. In addition, the distribution control unit 82 controls distribution of the print instruction signal 99 to the user terminal 11.

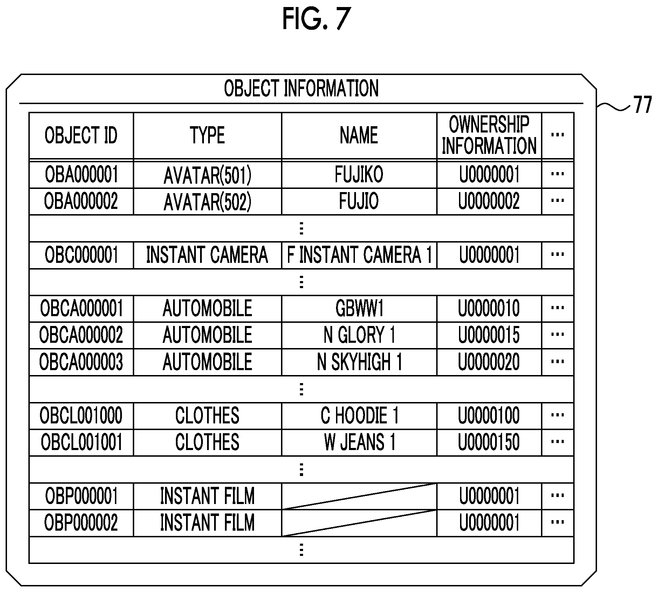

As shown in FIG. 7 as an example, the object information 77 is information in which a type of object, a name of object, ownership information, and the like are registered for each object ID for uniquely identifying each object. The type includes various types such as an avatar 50, a virtual instant camera 92 (simply referred to as an instant camera in FIG. 7), a virtual instant film 98 (simply referred to as an instant film in FIG. 7), an automobile, and clothes. In a case of the avatar 50, a name given to the avatar 50 by the user U is registered as the name. A name of the article is registered in the virtual instant camera 92 and the article such as the automobile. The name is not registered in the virtual instant film 98.

The ownership information is information indicating which user U owns the object. Specifically, the ownership information is the user ID of the user U who owns the object. For example, an avatar 501 is owned by the user U having a user ID "U0000001".

The object can be sold, purchased, or transferred. The processing unit 81 updates the ownership information of the object, here, the user ID, in association with the sale, purchase, or transfer of the object. For example, currency valid in the virtual space VS is used for selling and purchasing the objects. Note that "selling and purchasing" includes a case where a user U purchases an object prepared by the creator of the virtual space VS and a case where an object is sold from one user U to another user U.

Although not shown, the virtual instant film 98 also stores an imaging date and time based on a time in the virtual space VS, an imaging position in the virtual space VS, and the like. In addition, the virtual instant film 98 includes not only the images captured by the user U but also the images prepared by the creator of the virtual space VS. In the virtual instant film 98 prepared by the creator of the virtual space VS, the user ID as the ownership information is not registered in an initial state.

The avatar 50 represented by the object ID "OBA000001" is the avatar 501 shown in FIG. 3. In addition, the avatar 50 represented by the object ID "OBA000002" is the avatar 502 shown in FIG. 3.

As shown in FIG. 8 as an example, the user information 78 includes the user ID, the password, the camera ID of each instant camera 10, the terminal ID of each user terminal 11, the age, and the gender. In addition, the user information 78 includes the registration image 85. The registration image 85 is an image registered by the user U by himself/herself at the time of installation of the virtual space AP 70 or the like, and is an image in which the user U appears as the subject.

Next, the imaging output processing will be described with reference to FIGS. 9 and 10.

As shown in FIG. 9 as an example, various events occur in the virtual space VS. In FIG. 9, the level up of the avatar 501 is shown as an example of the event. Hereinafter, the user U having the user ID "U0000001" who owns the avatar 501 will be referred to as a user U1.

In a case where an event occurs in the virtual space VS, the user U1 in the real space RS tries to capture an instant photograph 95 of a selfie with the instant camera 10 in order to keep his/her emotion such as happiness at that time. First, the user U1 turns on the power of the instant camera 10 and sets a reference position and a reference orientation of the instant camera 10.

The reference position is, for example, the center of the chest of the user U1. The reference orientation is, for example, a state where the front of the instant camera 10, from which the objective lens 22 is exposed, is directed to the user U1 side and the up-down direction of the instant camera 10 is aligned with the vertical direction. As a procedure for setting the reference position and the reference orientation, for example, the following method can be adopted. First, after the power of the instant camera 10 is turned on, a guide voice for setting the instant camera 10 to the reference position and the reference orientation is played, or a guide screen is displayed on the rear surface monitor 43. In response to this, the user U1 moves the instant camera 10 to the reference position and sets the reference orientation. Then, the setting of the reference position and the reference orientation is completed by selecting the setting button of the operation unit 28.

After the setting of the reference position and the reference orientation is completed, the user U1 holds the instant camera 10 in front of his/her face for a selfie. The position/orientation sensor 41 detects the relative position and the relative orientation of the instant camera 10 with respect to the reference position and the reference orientation, and outputs a sensor detection result 90. The communication unit 39 transmits the sensor detection result 90 to the user terminal 11. The sensor detection result 90 includes the camera ID of the instant camera 10 and the terminal ID of the user terminal 11. The browser control unit 72 of the user terminal 11 receives the sensor detection result 90 and transfers the sensor detection result 90 to the virtual space management server 13. The receiving unit 80 of the virtual space management server 13 receives the sensor detection result 90. The receiving unit 80 outputs the sensor detection result 90 to the processing unit 81.

The processing unit 81 determines the relative position and the relative orientation of the instant camera 10 that is held by the current user U in the real space RS based on the sensor detection result 90. The processing unit 81 causes the virtual instant camera 92 to appear at a position and an orientation corresponding to the determined relative position and relative orientation in the virtual space VS, and causes the avatar 501 to hold the virtual instant camera 92 in his/her hand. In this case, the processing unit 81 generates, for example, a virtual space display screen including an animation having a visual effect in which the virtual instant camera 92 falls from the sky together with a meteor. The virtual instant camera 92 is an example of a "second imaging device" according to the technology of the present disclosure.

The user U changes the position and the orientation of the instant camera 10 to decide the composition. The processing unit 81 determines the current relative position and relative orientation of the instant camera 10 from the sensor detection result 90 that is sequentially transmitted from the user terminal 11. Then, the position and the orientation of the virtual instant camera 92 in the virtual space VS, and the display of the avatar 501 having the virtual instant camera 92 are also changed.

In a case where the composition is decided, the user U operates the release button of the instant camera 10 to issue an imaging instruction for the instant photograph 95, as shown in FIG. 10 as an example. The printer 44 prints the instant photograph 95 on the instant film 45 under the control of the printer driver 40.

The communication unit 39 transmits the sensor detection result 90 and an imaging instruction signal 96 in a case where the imaging instruction is issued, to the user terminal 11. The imaging instruction signal 96 includes the camera ID of the instant camera 10 and the terminal ID of the user terminal 11, as in the sensor detection result 90. The browser control unit 72 of the user terminal 11 receives the sensor detection result 90 and the imaging instruction signal 96, and transfers the sensor detection result 90 and the imaging instruction signal 96 to the virtual space management server 13. The receiving unit 80 of the virtual space management server 13 receives the sensor detection result 90 and the imaging instruction signal 96. The receiving unit 80 outputs the sensor detection result 90 and the imaging instruction signal 96 to the processing unit 81.

The processing unit 81 receives the sensor detection result 90 and the imaging instruction signal 96, and issues an imaging instruction for a virtual instant photograph 97 to the virtual instant camera 92. The processing unit 81 determines the relative position and the relative orientation of the instant camera 10 in a case where the imaging instruction is issued, based on the sensor detection result 90. The processing unit 81 generates the virtual instant photograph 97 corresponding to the instant photograph 95 captured by the instant camera 10, based on the determination result. More specifically, the processing unit 81 generates the virtual instant photograph 97 that reproduces how the subject of the instant photograph 95, here the user U1, appears. FIG. 10 illustrates the virtual instant photograph 97 in which the face of the avatar 501 in which the size and the orientation of the face of the user U1 captured by the instant camera 10 positioned slightly above and to the right oblique side of the face of the user U1 is reproduced appears. The virtual instant photograph 97 is an example of a "second image" according to the technology of the present disclosure.

The processing unit 81 prints the virtual instant photograph 97 on a virtual instant film 98. In this case, the processing unit 81 generates a virtual space display screen including an animation that provides a visual effect giving the impression that the virtual instant photograph 97 has been printed out from the virtual instant camera 92. As described above, the virtual instant film 98 is treated as an object in the virtual space VS, and the virtual instant photograph 97 can be viewed, sold and purchased, or transferred.

The distribution control unit 82 transmits a print instruction signal 99 of the virtual instant photograph 97 to the user terminal 11. The browser control unit 72 of the user terminal 11 receives the print instruction signal 99 and transfers the print instruction signal 99 to the instant camera 10. The communication unit 39 of the instant camera 10 receives the print instruction signal 99 and outputs the print instruction signal 99 to the printer driver 40. The printer 44 prints the virtual instant photograph 97 on the instant film 45 under the control of the printer driver 40.

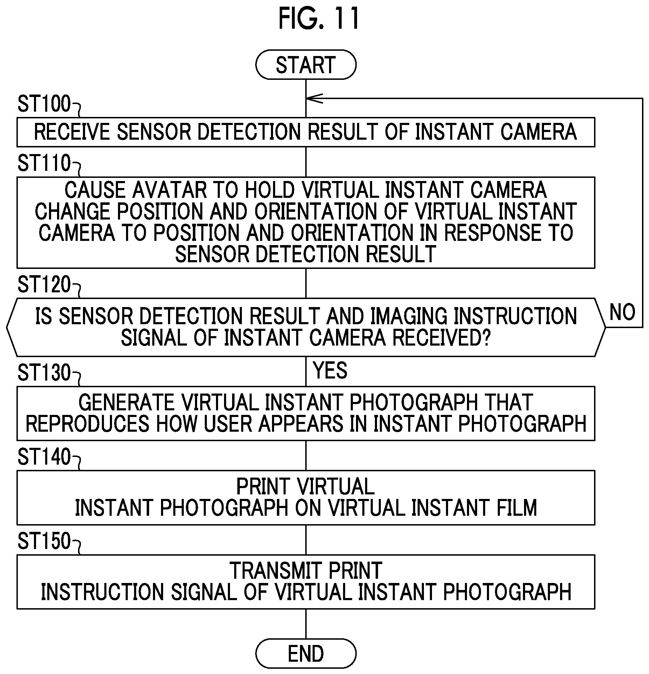

Next, the operation of the above-described configuration will be described with reference to, for example, a flowchart illustrated in FIG. 11. The CPU 57A of the user terminal 11 functions as the browser control unit 72 upon activation of the virtual space AP 70, as shown in FIG. 5. Additionally, the CPU 57B of the virtual space management server 13 functions as the receiving unit 80, the processing unit 81, and the distribution control unit 82 upon activation of the operation program 75, as shown in FIG. 6.

As shown in FIGS. 9 and 10, in a case where an event such as the level up of the avatar 50 occurs in the virtual space VS, the user U captures the instant photograph 95 of the selfie with the instant camera 10. In this case, the sensor detection result 90 of the position/orientation sensor 41 of the instant camera 10 is received by the receiving unit 80 (step ST100). The sensor detection result 90 is output from the receiving unit 80 to the processing unit 81.

The processing unit 81 determines the relative position and the relative orientation of the instant camera 10 based on the sensor detection result 90. Then, the virtual instant camera 92 appears at a position and an orientation corresponding to the determined relative position and relative orientation, and the virtual instant camera 92 is held by the hand of the avatar 501. In a case where the user U changes the position and the orientation of the instant camera 10, the position and the orientation of the virtual instant camera 92 are also changed (step ST110).

In a case where the user U operates the release button of the instant camera 10 to issue an imaging instruction for the instant photograph 95, the sensor detection result 90 and the imaging instruction signal 96 are received by the receiving unit 80 (YES in step ST120). The sensor detection result 90 and the imaging instruction signal 96 are output from the receiving unit 80 to the processing unit 81. In the instant camera 10, the instant photograph 95 is printed on the instant film 45 by the printer 44.

The processing unit 81 also issues an imaging instruction for the virtual instant photograph 97 to the virtual instant camera 92. The processing unit 81 determines the relative position and the relative orientation of the instant camera 10 in a case where the imaging instruction is issued, based on the sensor detection result 90. Then, based on this determination result, the virtual instant photograph 97 that reproduces how the user U appears in the instant photograph 95 is generated (step ST130).

The processing unit 81 prints the virtual instant photograph 97 on the virtual instant film 98 (step ST140). In addition, the distribution control unit 82 transmits the print instruction signal 99 for the virtual instant photograph 97 to the user terminal 11 (step ST150).

The print instruction signal 99 is received by the communication unit 39 of the instant camera 10. The print instruction signal 99 is output from the communication unit 39 to the printer driver 40. Then, the printer 44 prints the virtual instant photograph 97 on the instant film 45.

As described above, the CPU 57B of the virtual space management server 13 functions as the processing unit 81. In a case where the user U issues the imaging instruction for the instant photograph 95 to the instant camera 10 present in the real space RS, the processing unit 81 issues the imaging instruction for the virtual instant photograph 97 to the virtual instant camera 92 present in the virtual space VS. The processing unit 81 causes the virtual instant camera 92 to output the virtual instant photograph 97 corresponding to the instant photograph 95 captured by the instant camera 10. Therefore, it is possible to link the imaging by the instant camera 10 in the real space RS and the imaging by the virtual instant camera 92 in the virtual space VS. In the real space RS and the virtual space VS, it is possible to respond to the desire of the user U to enjoy imaging without dividing the space. In addition, it is possible to respond to the desire of the user U to keep the emotion of an event such as level up experienced in the virtual space VS as a memory in the real space RS.

The processing unit 81 generates the virtual instant photograph 97 that reproduces how the user U appears in the instant photograph 95. Therefore, it is possible to obtain the virtual instant photograph 97 that is more interesting to the user U. In addition, it is possible to more easily cause the user U to recall the emotion of the event experienced in the virtual space VS, as compared with a case where how the user U appears in the instant photograph 95 and how the user U appears in the virtual instant photograph 97 are completely different.

The instant camera 10 is provided with the position/orientation sensor 41 that detects the relative position and the relative orientation of the instant camera 10 with respect to the reference position and the reference orientation. The processing unit 81 generates the virtual instant photograph 97 that reproduces how the user U appears in the instant photograph 95, based on the sensor detection result 90 of the position/orientation sensor 41 in a case where the imaging instruction is issued. Therefore, it is possible to generate the virtual instant photograph 97 that more accurately reproduces how the user U appears in the instant photograph 95, as compared with a case where the virtual instant photograph 97 is generated without referring to the sensor detection result 90. The quality of the virtual instant photograph 97 can be further improved.

The instant camera 10 has a function of printing an image (printer driver 40 and printer 44). The processing unit 81 prints the virtual instant photograph 97 not only from the virtual instant camera 92 but also from the instant camera 10. Therefore, it is possible to view the actual virtual instant photograph 97 even in the real space RS. In addition, it is possible to more easily cause the user U to recall the emotion of the event experienced in the virtual space VS by viewing the virtual instant photograph 97 in a pair with the instant photograph 95. On the contrary, the virtual instant camera 92 may print the instant photograph 95, and the virtual instant film 98 on which the instant photograph 95 is printed may appear in the virtual space VS.

### [Second embodiment]

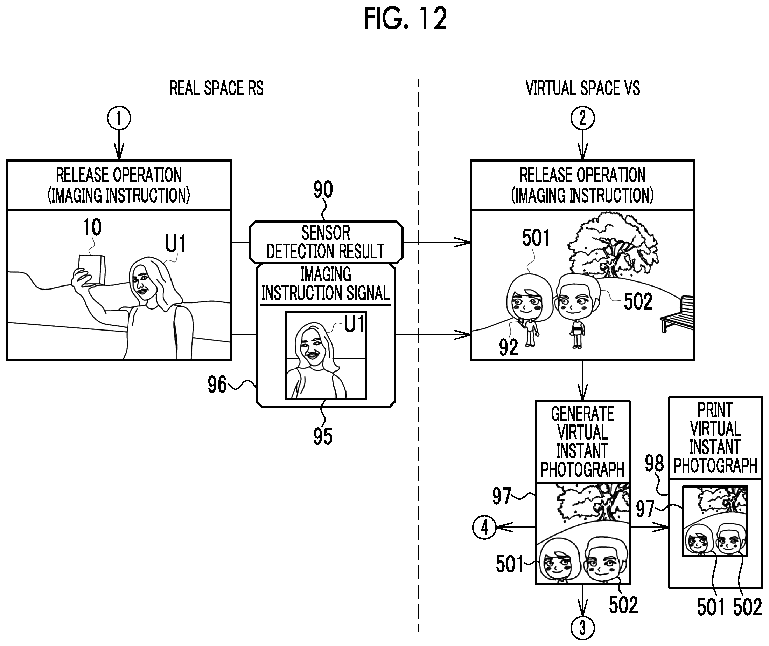

Imaging output processing of a second embodiment will be described with reference to FIGS. 12 to 14. As in the first embodiment, a case where the user U1 takes a selfie with the instant camera 10 in the real space RS will be described as an example of the second embodiment. The user U1 is an example of a "first user" according to the technology of the present disclosure.

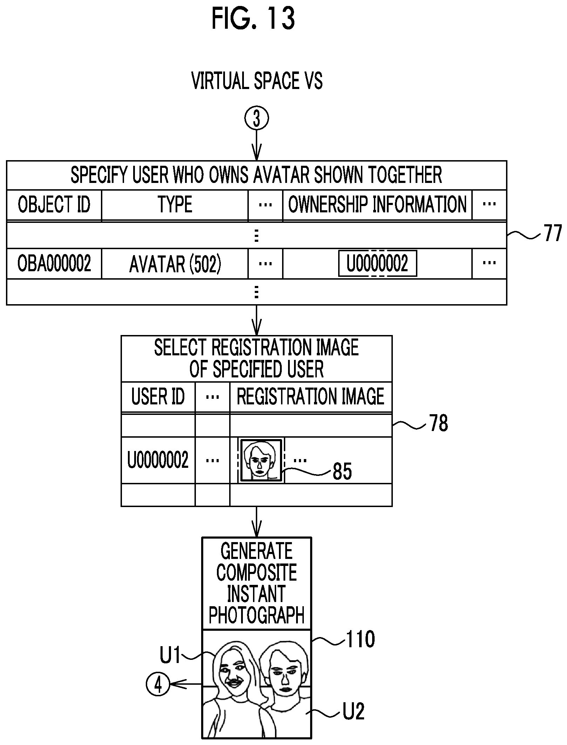

As shown in FIG. 12 as an example, in the second embodiment, the instant camera 10 includes the instant photograph 95 in the imaging instruction signal 96. The processing unit 81 receives the imaging instruction signal 96 and performs the following processing. First, a well-known face recognition technology is used to collate the face appearing in the instant photograph 95 with the face of the registration image 85 of the user information 78, and it is determined whether only the user U1 appears in the instant photograph 95. In addition, as in the first embodiment, the processing unit 81 generates the virtual instant photograph 97 in response to the imaging instruction signal 96, but determines whether only the avatar 501 of the user U1 appears in the virtual instant photograph 97. In a case where the avatar 501 of the user U1 and the avatar 50 of the user U different from the user U1 appear in the virtual instant photograph 97 and only the user U1 appears in the instant photograph 95, the processing unit 81 further performs the following processing. FIG. 12 shows a case where the avatar 502 owned by the user U having the user ID "U0000002" appears in the virtual instant photograph 97 together with the avatar 501. Hereinafter, the user U having the user ID "U0000002" who owns the avatar 502 will be referred to as a user U2 (see FIG. 13). The user U2 is an example of a "second user" according to the technology of the present disclosure. In addition, the avatar 501 is an example of a "first avatar" according to the technology of the present disclosure, and the avatar 502 is an example of a "second avatar" according to the technology of the present disclosure.

As shown in FIG. 13 as an example, the processing unit 81 specifies the user U (user U2) who owns the avatar 502 appearing together with the avatar 501 in the virtual instant photograph 97 with reference to the object information 77. Next, the processing unit 81 selects the registration image 85 of the specified user U2 from the user information 78. The processing unit 81 composites the user U2 appearing in the selected registration image 85 into the instant photograph 95 transmitted together with the imaging instruction signal 96 to generate a composite instant photograph 110. In this case, the processing unit 81 generates the composite instant photograph 110 without a sense of incongruity by using a machine learning model specialized in image compositing of people.

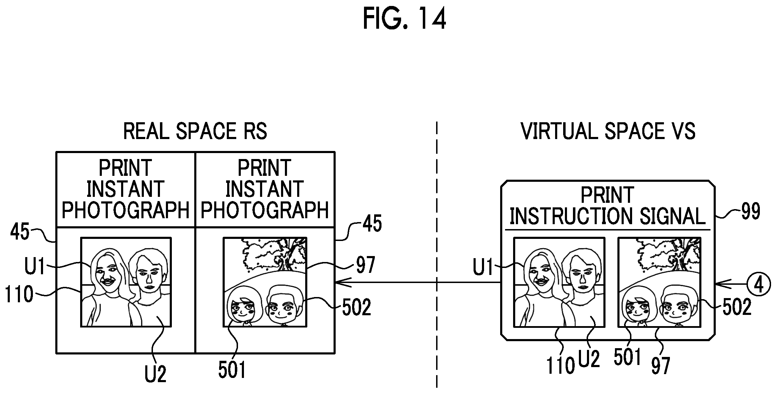

As shown in FIG. 14 as an example, the distribution control unit 82 transmits print instruction signals 99 for the virtual instant photograph 97 and the composite instant photograph 110 to the user terminal 11. The browser control unit 72 of the user terminal 11 receives the print instruction signal 99 and transfers the print instruction signal 99 to the instant camera 10. The communication unit 39 of the instant camera 10 receives the print instruction signal 99 and outputs the print instruction signal 99 to the printer driver 40. The printer 44 prints the virtual instant photograph 97 and the composite instant photograph 110 on the instant film 45 under the control of the printer driver 40.

As described above, in the second embodiment, in a case where the avatar 501 active in the virtual space VS of the user U1 who has issued the imaging instruction to the instant camera 10 in the real space RS and the avatar 502 of the user U2 different from the user U1 appear in the virtual instant photograph 97 and only the user U1 appears in the instant photograph 95, the processing unit 81 composites the user U2 into the instant photograph 95 to generate the composite instant photograph 110. Accordingly, it is possible to capture, in an actual instant photograph, the user U2, who acts together with the avatar 501 in the virtual space VS and whose avatar 502 appears in the virtual instant photograph 97 but is not present at the place in the real space RS, as though the user U2 is present at that place.

The fact that the avatar 502 appears together in the virtual instant photograph 97 means that the avatar 502 is in an intimate relationship with the avatar 501 at least in the virtual space VS. Therefore, by generating the composite instant photograph 110 in which the intimate relationship in the virtual space VS is continued in the real space RS, the interest of the user U can be further aroused. It is possible to respond to the request to share the emotion of the event experienced in the virtual space VS with the user U in an intimate relationship who is not present in the real space RS.

The second user to be composited into the composite instant photograph 110 is not limited to the one person exemplified. Two or more users may be composited. In addition, the user U to be composited may be limited to the user U who has been registered as a friend. In this way, it is possible to prevent the user U of the avatar 50 having no relationship, whose avatar 50 happens to appear in the virtual instant photograph 97, from being accidentally composited into the instant photograph 95.

The virtual instant photograph 97 may have a slightly pulled-back composition so as to allow it to be understood that the avatar 50 is holding the virtual instant camera 92.

The event is not limited to the level up in the example. The event may be a case in which a companion who acts together is added, a case in which an item that is a key to game strategy is obtained, and the like. In addition, the event may be a seasonal association such as a Christmas party, a New Year's party, or the like held for each virtual space VS, or a non-seasonal association, such as a birthday party of a certain user U, an anniversary party of the virtual space VS, or a virtual culture lecture.

The virtual instant photograph 97 that reproduces how the user U appears in the instant photograph 95 may be generated by performing image analysis on how the face of the user U appears in the instant photograph 95 without referring to the sensor detection result 90 of the position/orientation sensor 41. A machine learning model that outputs the virtual instant photograph 97 that reproduces how the user U appears in the instant photograph 95 may be used in response to the input of the instant photograph 95.

Although the first space is described as the real space RS, the second space is described as the virtual space VS, the first imaging device is described as the instant camera 10, the second imaging device is described as the virtual instant camera 92, the first image is described as the instant photograph 95, and the second image is described as the virtual instant photograph 97, the present disclosure is not limited thereto. On the contrary, the first space may be the virtual space VS, the second space may be the real space RS, the first imaging device may be the virtual instant camera 92, the second imaging device may be the instant camera 10, the first image may be the virtual instant photograph 97, and the second image may be the instant photograph 95. In this case, in order to generate the instant photograph 95 that reproduces how the avatar 50 appears in the virtual instant photograph 97, in the instant camera 10, a guide voice for setting the position and the posture to have the same appearance condition as the avatar 50 in the virtual instant photograph 97 is played, or a guide screen is displayed on the rear surface monitor 43.

For example, the virtual space VS may be a virtual space in which a scene of an era older than the real space RS, such as the Edo period, is reproduced. In this case, in a case where the current scene is captured by the instant camera 10 in the real space RS, the scene of the old era is captured by the virtual instant camera 92 in the virtual space VS with the same angle of view. As described above, the imaging method of the instant camera 10 is not limited to the selfie of the user U.

Although an example in which various types of information, such as the sensor detection result 90, the imaging instruction signal 96, and the print instruction signal 99, are exchanged between the instant camera 10 and the virtual space management server 13 via the user terminal 11 has been described, the present disclosure is not limited thereto. Various types of information may be directly exchanged between the instant camera 10 and the virtual space management server 13 without passing through the user terminal 11.

The hardware configuration of the computer that constitutes the virtual space management server 13 can be variously modified. For example, the virtual space management server 13 may be configured using a plurality of physically separate computers as hardware, for the purpose of improving processing capability and reliability. For example, the functions of the receiving unit 80 and the distribution control unit 82, and the function of the processing unit 81 may be distributed across two computers. In this case, the virtual space management server 13 is configured using two computers. The user terminal 11 may perform some or all of the functions of the virtual space management server 13.

In this manner, the hardware configuration of the computer of the virtual space management server 13 can be appropriately changed according to the required performance, such as processing capability, safety, and reliability. Further, not only hardware but also APs such as the virtual space AP 70 and the operation program 75 can, of course, be duplicated, or distributed and stored across a plurality of storage units for the purpose of ensuring safety and reliability.

In each of the above-described embodiments, for example, as a hardware structure of a processing unit that executes various processes such as the browser control unit 72, the receiving unit 80, the processing unit 81, and the distribution control unit 82, various types of processors as described below can be used. The various types of processors include, in addition to the CPUs 57A and 57B, which are general-purpose processors that function as various processing units by executing software (the virtual space AP 70 and the operation program 75), a programmable logic device (PLD), such as a field-programmable gate array (FPGA), which is a processor capable of having a circuit configuration changed after manufacturing, and/or a dedicated electric circuit, such as an application specific integrated circuit (ASIC), which is a processor having a circuit configuration specifically designed to execute specific processing.

One processing unit may be composed of one of these various processors or a combination of two or more processors of the same type or different types (for example, a combination of a plurality of FPGAs or a combination of a CPU and an FPGA). Alternatively, a plurality of processing units may be composed of one processor.

As an example in which the plurality of processing units are configured by one processor, first, as represented by a computer such as a client and a server, there is a form in which one processor is configured by a combination of one or more CPUs and software and this processor functions as the plurality of processing units. Secondly, as represented by a system on chip (SoC) or the like, there is a configuration in which a processor that realizes the functions of the entire system including a plurality of processing units by one integrated circuit (IC) chip is used. In this manner, various processing units are configured by using one or more of the various processors as a hardware structure.

More specifically, a circuitry combining circuit elements such as semiconductor elements can be used as the hardware structure of the various processors.

The technology according to the following supplementary notes can be understood from the above description.

### [Appendix 1]

An imaging output device comprising a processor,
in which the processor is configured to:
issue, in a case where an imaging instruction for an image is issued by a user to a first imaging device present in a first space, an imaging instruction for an image to a second imaging device present in a second space different from the first space; and
cause the second imaging device to output a second image corresponding to a first image captured by the first imaging device.

### [Appendix 2]

The imaging output device according to Appendix 1,
in which the processor is configured to generate the second image that reproduces how a subject appears in the first image.

### [Appendix 3]

The imaging output device according to Appendix 2,
in which the first space is a real space and the second space is a virtual space,
the first imaging device is provided with a sensor that detects a relative position and a relative orientation of the first imaging device with respect to a reference position and a reference orientation, and
the processor is configured to generate the second image that reproduces how the subject appears in the first image, based on a detection result of the sensor in a case where the imaging instruction is issued.

### [Appendix 4]

The imaging output device according to any one of Appendices 1 to 3,
in which the first space is a real space and the second space is a virtual space, and
the processor is configured to composite, in a case where a first avatar of a first user who has issued the imaging instruction to the first imaging device in the real space, the first avatar being active in the virtual space, and a second avatar of a second user different from the first user appear in the second image and only the first user appears in the first image, the second user into the first image.

### [Appendix 5]

The imaging output device according to any one of Appendices 1 to 4,
in which the first space is a real space and the second space is a virtual space,
the first imaging device has a function of printing an image, and
the processor is configured to cause, in addition to the second imaging device, the first imaging device to also print the second image.

The technology of the present disclosure can also appropriately combine various embodiments and/or various modification examples described above. It is needless to say that the technology of the present disclosure is not limited to each of the embodiments described above and various configurations can be employed without departing from the gist. Furthermore, the technology of the present disclosure extends to a storage medium that non-transitorily stores the program, and a computer program product including the program, in addition to the program.

The description content and the illustrated content described above are detailed descriptions of portions related to the technology of the present disclosure and are merely an example of the technology of the present disclosure. For example, the above description of the configuration, the function, the operation, and the effect are the description of examples of the configuration, the function, the operation, and the effect of the parts according to the technology of the present disclosure. Accordingly, it goes without saying that unnecessary parts may be deleted, new elements may be added, or replacements may be made with respect to the above-described contents and the above-shown contents within a range that does not deviate from the gist of the technology of the present disclosure. Further, in order to avoid complication and facilitate understanding of the portion according to the technology of the present disclosure, the description related to common general knowledge not requiring special description in order to implement the technology of the present disclosure is omitted in the above description content and illustrated content.

In this specification, "A and/or B" is synonymous with "at least one of A or B". That is, "A and/or B" means that it may be only A, only B, or a combination of A and B. In addition, in the present specification, in a case where three or more matters are expressed by being connected by "and/or", the same concept as "A and/or B" is applied.

All documents, patent applications, and technical standards disclosed in this specification are incorporated in this specification by reference such that the incorporation of each of the documents, the patent applications, and the technical standards by reference is specific and is as detailed as that in a case where the documents, the patent applications, and the technical standards are described individually.

## Claims

1. An imaging output device comprising a processor,
wherein the processor is configured to:
issue, in a case where an imaging instruction for an image is issued by a user to a first imaging device present in a first space, an imaging instruction for an image to a second imaging device present in a second space different from the first space; and
cause the second imaging device to output a second image corresponding to a first image captured by the first imaging device.

2. The imaging output device according to claim 1,
wherein the processor is configured to generate the second image that reproduces how a subject appears in the first image.

3. The imaging output device according to claim 2,
wherein the first space is a real space and the second space is a virtual space,
the first imaging device is provided with a sensor that detects a relative position and a relative orientation of the first imaging device with respect to a reference position and a reference orientation, and
the processor is configured to generate the second image that reproduces how the subject appears in the first image, based on a detection result of the sensor in a case where the imaging instruction is issued.

4. The imaging output device according to claim 1,
wherein the first space is a real space and the second space is a virtual space, and
the processor is configured to composite, in a case where a first avatar of a first user who has issued the imaging instruction to the first imaging device in the real space, the first avatar being active in the virtual space, and a second avatar of a second user different from the first user appear in the second image and only the first user appears in the first image, the second user into the first image.

5. The imaging output device according to claim 1,
wherein the first space is a real space and the second space is a virtual space,
the first imaging device has a function of printing an image, and
the processor is configured to cause, in addition to the second imaging device, the first imaging device to also print the second image.

6. An operation method of an imaging output device, the operation method comprising:
issuing, in a case where an imaging instruction for an image is issued by a user to a first imaging device present in a first space, an imaging instruction for an image to a second imaging device present in a second space different from the first space; and
causing the second imaging device to output a second image corresponding to a first image captured by the first imaging device.

7. An operation program of an imaging output device, the operation program causing a computer to execute a process comprising:
issuing, in a case where an imaging instruction for an image is issued by a user to a first imaging device present in a first space, an imaging instruction for an image to a second imaging device present in a second space different from the first space; and
causing the second imaging device to output a second image corresponding to a first image captured by the first imaging device.
